# EUROPEAN PATENT SPECIFICATION

(11) **EP 1 798 993 B1**
(45) Date of publication and mention of the grant of the patent: **26.05.2010**
(21) Application number: 06025231.9
(22) Date of filing: 06.12.2006
(51) Int. Cl.: H04Q 3/60

(54) **Remote access communication system and control method thereof**
Kommunikationssystem für sicheren Fernzugriff und Verfahren dafür
Système de communication d'accès à distance et méthode correspondante

(30) Priority: 13.12.2005 CN 200510120815
(43) Date of publication of application: 20.06.2007
(73) Proprietor: Huawei Technologies Co., Ltd., Longgang District, Shenzhen Guangdong 518129 (CN)
(72) Inventor: Ma, Jingfan, Huawei Administration Building, Guandong Province 518129 (CN); Huang, Shikui, Huawei Administration Building, Guandong Province 518129 (CN)
(74) Representative: Epping - Hermann - Fischer

(56) References cited:
- EP-A2- 0 858 221
- EP-A2- 1 229 706
- WO-A-01/20922
- WO-A-2005/091613
- WO-A-2006/063951
- WO-A2-01/45452

## Description

The present invention relates to network communication technology, and particularly to a remote access communication system and a control method thereof.

Remote communication access network, as one of the most important network infrastructures for present telecom network devices, connects local network communication exchanges with users, responsible for transmitting various telecom services to the users transparently. Various services are provided to end users by various service networks mostly through access networks, so access networks must satisfy various service networks' requirements for access users and users' needs for a broad range of services. A future access network will be one capable of providing high-capacity, high-rate, and high-quality integrated services (data, video, voice, multimedia, etc).

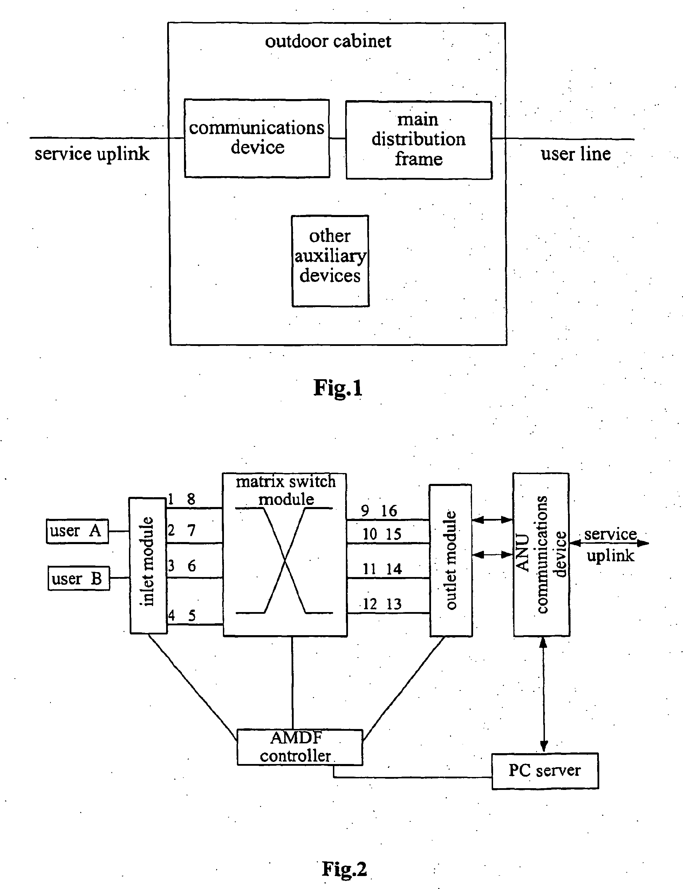

Generally a remote access Communication system locates at the end of a telecom network, serving as a window for the telecom network to provide services to users. A remote access Communication system covers all devices and transmission media from service provision points to user ports. In general, a prior remote access Communication system is mainly composed of a main distribution frame (MDF), an access network unit (ANU) and other auxiliary devices, referring to Fig.1. All device modules are placed in a cabinet and are connected to the outside through cables or optical cables. A remote access device accomplishes access of user communication data, and performs data conversion or aggregation before transmitting the data to an upper layer network through uplink interfaces. The main distribution frame implements a mapping between Communication device ports and user lines outside.

A main distribution frame is placed between network devices and user ports, responsible for match connection between device cables and user cables. An MDF is composed of an exterior line module (horizontal module), an interior line module (vertical module) and connection lines between the exterior line module and the interior line module; different correspondence between interior line module ports and exterior line module ports can be obtained through selecting different line connections.

The remote access device can be a local exchange, a narrowband access device, a digital subscriber line access multiplexer (DSLAM), a fiber access device, and can also be an integrated access device providing access to narrowband services and broadband services access simultaneously.

Other auxiliary devices include a device power supply system (active/standby power supply system), a thermostat, and an alarm device, etc. The power supply system provides power supply for operations of the remote access device and the main distribution frame. Generally the power supply system includes two modules: an active module and a standby module. The active module is a primary power supply, which converts a civil electric supply into a power supply for system operation through voltage conversion; the standby module is commonly a battery pack, which provides a required power supply for communication devices when the civil electric supply fails. The thermostat is responsible for adjusting interior temperature of the outdoor cabinet, ensuring that the interior temperature of the cabinet meets operation requirements of the remote access device, the main distribution frame and etc. The alarm device monitors operation situations of all devices in the cabinet, and other situations, such as humidity, temperature, waterlogging, etc. With the development of technologies, E1 access, optical fiber access, etc. have become universal access modes in the access field; and correspondingly a digital distribution frame (DDF) and an optical distribution frame (ODF) have been put into use with the development of the main distribution frame technology. But when a remote access device performs maintenance operations, such as service fulfillment for a new user, new service addition, relocation or number change for a present user, a general method is to modify the user's configuration data in the device firstly, and then change corresponding relationships between internal line modules and external line modules in the main distribution frame, accomplishing change of functions.

At present, a remote access Communication system generally can be located outdoors, on a roadside, or in a basement, etc. When adding new users or adding new requirements of users, a maintainer has to go to remote field locations to allocate number for users and fulfill users' service requirements through jumping wires in the MDF. Even a single user's new service requirement or service fulfillment requirement would need a special trip to remote field locations for maintenance operations. Such frequent and lots of maintenance operations result in high labor cost. More importantly, none of the services can be fulfilled in real time, and operations such as service fulfillment need a longer process and period, which makes it difficult to improve service response and service quality to users.

EP 1229706 A2 discloses a system and method for providing digital subscriber line service that uses a cross-connect switch to switch in new connections and switch out obsolete connections. The method comprises the steps of: providing digital subscriber line service for a first subscriber via a cross-connect switch connected to a digital subscriber line access multiplexer connected to a digital telecommunications network, the cross connect switch supplying a connection between data processing equipment of the first subscriber and the digital subscriber line access multiplexer; receiving, at a network management system connected to the cross connect switch, an indication that the first subscriber has terminated service; in response to receiving the message at the network management system, transmitting a command to the cross connect switch to switch out the connection of the data processing equipment of first subscriber to the digital access multiplexer; and in response to receiving the command at the cross-connect switch, switching out the connection of the data processing equipment of first subscriber to the digital access multiplexer. WO 2005/091613 discloses a method and system for providing digital subscriber line (xDSL) and telephone service to subscribers via a telecommunication network. The Installation of xDSL for providing broadband service is performed by connecting the subscriber line in the central office main distribution frame (MDF) to a high-speed data network. The method comprises the steps of: connecting the subscriber lines to a pool of integrated filter board (s) on the exchange side for separating the signal components relating to the telephone service from signal components relating to the digital data signals, routing the signal components relating to the telephone service to a new physical port on the exchange, re-configuring the logical port on the exchange to correspond with the new physical port in order to retain the subscriber's previous telephone service and number, and routing the digital data signals from the pooled integrated filter board(s) to a modem bank for transmission to and from the data network. In a further embodiment, the system for providing DSL service is operable in cooperation with an automated cross-connect system installed within the MDF. The automated cross-connect system performs automated routing of subscriber lines to the pooled integrated filter board(s) for onward connection to the exchange and data network.

It is an object of the present invention to provide a remote access communcation system and a method for controlling a remote access communication system which enable a good service response and service quality to users.

The object is achieved by the features of the independent claims. Advantageous embodiments of the invention are given by the features of the dependent claims.

The invention is distinguished according to a first aspect by a remote access Communication system, including an automated main distribution frame (AMDF), a remote access device and a device management system, wherein, under control of the device management system, wherein the automated main distribution frame is configured to receive a configuration command when there is a service requirement from a user, and verify validity of the configuration command after receiving the configuration command, and the automated main distribution frame comprises a matrix switch module and is configured to configure the matrix switch module according to the configuration command to implement the port correspondence between a user device and the remote access device if the verification succeeds.

According to a preferred embodiment of the first aspect, the automated main distribution frame further includes an inlet module and an outlet module connected with the matrix switch module respectively, and an automated main distribution frame controller connected with the above three modules and used to start and configure the automated main distribution frame, wherein input ports of the inlet module are to be connected with user devices by cables and output ports of the outlet module are to be connected with the remote access device through cables.

According to a further preferred embodiment of the first aspect the remote access device is a local switch or local exchange.

According to a further preferred embodiment of the first aspect the remote access device is a narrowband access device or a broadband access device.

According to a further preferred embodiment of the first aspect the remote access device is a DSLAM access device.

According to a further preferred embodiment of the first aspect the remote access device is an optical access device, in particular a fiber access device, in particular an optical fiber access device.

According to a further preferred embodiment the remote access device is an integrated access device providing access to narrowband services and broadband services access simultaneously.

The invention is distinguished according to a second aspect by a control method of a remote access Communication system.The method includes arranging an automated main distribution frame between user devices and a remote access device, sending a configuration command to said automated main distribution frame when there is a service requirement from a user; verifying validity of the configuration command after receiving the configuration command; and if the verification succeeds, configuring a matrix switch module in the automated main distribution frame according to the configuration command to implement the port correspondence between a user device and the remote access device.

According to a preferred embodiment of the second aspect of the invention the above step of accomplishing auto port-correspondence between the user and the remote access device includes the following step:
if the verification fails, the automated main distribution frame sends a warning to the device management system, and
the device management system determines whether to resend a command or to perform other operations according to the warning feedback.

According to a further preferred embodiment of the second aspect the method verifying validity of the configuration command includes a step of verifying truth or falsity of contents of a command field by the automated MDF controller.

According to a further preferred embodiment of the second aspect the method verifying validity of the configuration command includes a step of examining rationality of configuration data of a command field.

According to a further preferred embodiment of the second aspect the method verifying the validity of the configuration command includes a step of examining integrality of configuration data of a command field.

According to a further preferred embodiment of the second aspect , the device management system sends a configuration command to the automated main distribution frame through network management.

The present invention and/or its advantageous embodiments has the following effects:
1. Operating costs are reduced. Operations of jumping wires in the remote access Communication system can be directly and rapidly implemented under remote control of the device management system, so time is saved and there is no need to arrange staff for on-site operation, greatly reducing operation and maintenance cost and labor cost;
2. Speed of service fulfillment is increased. Since manual on-site operation is replaced by network management operation, a work of several days before can be finished most likely in several minutes using the embodiment of present invention, greatly improving speed of service fulfillment.
3. Because of the use of an automated main distribution frame connected with the remote access device, the automated main distribution frame completes wire jumpings at one time, avoiding any confusion caused by more irregular wire jumping in traditional methods, so a beautiful and orderly main distribution frame is achieved.
4. Because of the use of a device management system, wire jumping operations caused by number portable, number change and engineering line shifts can be completed locally or through a network management system, simplifying multiple wire jumping; and also avoiding loose and fall of sticking points in the main distribution frame caused by multi-clamping operations, therefore reducing occurrence of failures

The invention and its embodiments will be more fully appreciated by reference to the following detailed description of presently preferred but nonetheless illustrative embodiments in accordance with the present invention when taken in conjunction with the accompanying drawings.

The figures are illustrating:
Fig.1 is a diagram illustrating a structure of a remote access Communication system in prior art;
Fig.2 is a block diagram of a remote access Communication system described in an embodiment of the present invention;
Fig.3 is a flow chart of a control method of an embodiment of the present invention;
Fig.4 is a diagram illustrating an application mode in an embodiment of the present invention;
Fig.5 is diagram illustrating another application mode in the embodiment of the present invention.

The embodiments of the present invention will be further described in conjunction with the accompanying drawings.

As shown in Fig.2, a remote access communication system described in an embodiment of the present invention includes an automated main distributed frame, a remote access device for transparently transmitting various telecom services to users, and a device management system. Under control of the device management system, the automated main distribution frame and the remote access device implement auto port-correspondence between a user device and the remote device, and therefore accomplish automatic switch function.

The automated main distribution frame includes a matrix switch module, an inlet module and an outlet module connected with the matrix switch module respectively, and an automated main distribution frame controller connected with the above three modules and adapted to start and configure the automated main distribution frame. Input ports of the inlet module are connected to user devices by cables, and output ports of the outlet module are connected to the remote access device by cables.

In practical applications, there may be a certain convergence ratio between ports of the remote device and ports of user, which can be implemented through port configurations in an AMDF.

A remote access device serves as a window for a telecom network to provide services to users, which can be a local exchange, a narrowband access device, a broadband access device, a DSLAM access device, an optical access transmission device or a combination of the above devices, such as an integrated access device providing access to narrowband services and broadband services access simultaneously. It is responsible for transmitting transparently various telecom services to users, accomplishing user access, service fulfillment and switching.

The embodiment of the present invention also provides a control method utilizing the above remote access Communication system, the detailed steps thereof are as follows:
1) when there is a service requirement from a user, the device management system sends a configuration command to the automated main distribution frame through network management;
2) upon receiving the configuration command, the automated main distribution frame firstly verifies validity of the configuration command, which includes steps of verifying authentication of contents of a command field, examining rationality of configuration data in the command field, and examining integrality of the configuration data in the command field, etc. If the verification succeeds, the automated main distribution frame configures the matrix switch module according to the configuration command, to achieve a port correspondence between.the user and the remote access device. If the verification fails, the automated main distribution frame does not work, and it sends a warning to the device management system, to indicate that it receives an illegal command the device management system determines whether to resend the command or to perform other operations according to the warning feedback.

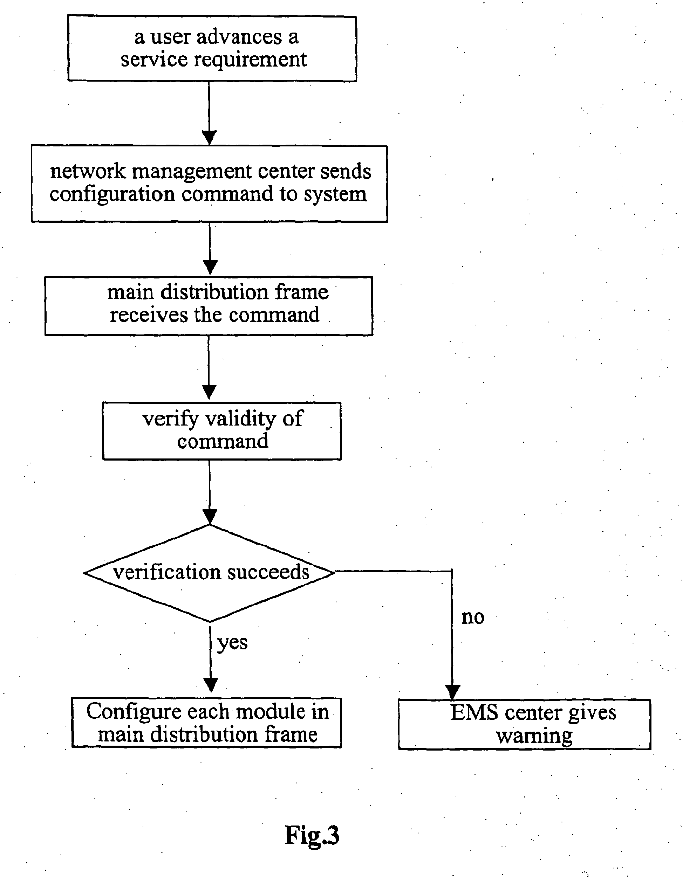

To describe the automated distribution method of the system of the embodiment of the present invention, we take a telephone system being widely used at present as an example. As shown in Figs 2 and 3, a lot of user ports are connected to the inlet module of the AMDF through twisted-pairs, i.e. communication cables of user board are connected to a port on one side of the AMDF; if user B (3-6, 4-5 user lines) requests for common broadband service, the device management system can be used to send a configuration command through local network management or remote network management. Upon receiving the configuration command, the AMDF firstly verifies validity of the configuration command, which includes the steps of verifying truth or falsity of contents of a command field, examining rationality of configuration data of the command field and integrality of the configuration data of the command field, etc. If the verification succeeds, the AMDF configures the matrix switch module according to the command, and connects lines 3-6, 4-5 on the side of user B(i.e. the side of the inlet module) to the corresponding lines 11-14, 12-13 on the side of the remote access device(i.e. the side of the outlet module), i.e. a twist-pair of the user is connected to a certain port of the device cables, so that the user terminal device is connected to the remote access device, and mutual communications with ANU achieves the purpose of service fulfillment for the user, and therefore accomplishes service fulfillment. The device control system, upon implementing of management software therein, can manage services directly and locally through on-site management of configuration interfaces by the AMDF, and can also manage service fulfillment remotely, to achieve auto service fulfillment. Remote management refers to implementing device management, service fulfillment and maintenance, etc utilizing an ANU Communication device and uplink service channels provided within an automated main distribution frame, in which information is provided to a network management system through service channels. The ANU Communication device provides a network management interface, and communicates with the ANU Communication device and the automated main distribution frame by using Simple Network Management Protocol (SNMP).

A PC server, adopting local or remote client-server architecture, can easily implement local network management and centralized network management.

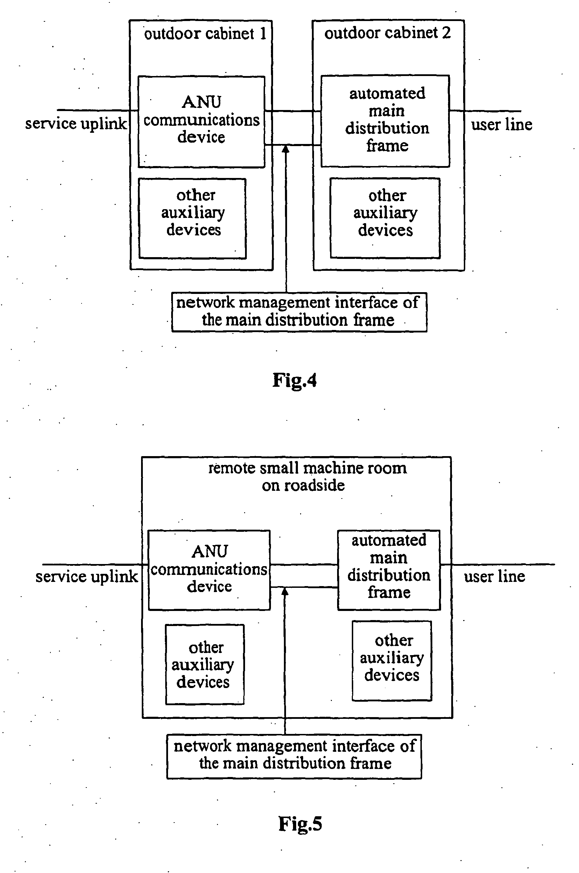

When more users access to a remote access device, the space in a cabinet may be a bottleneck for applications. In such a situation, the following two modes can be adopted:
Mode one: referring to Fig.4, the capacity reaches a certain amount, due to limitation of the cabinet capacity, the remote access device and the automated main distribution frame can be placed in two cabinets which are connected with each other through cables;
Mode two: referring to Fig.5, when the number of users increases again, all devices can be located in a small house on a roadside. The logical relationships between the devices are unchanged.

## Claims

1. A remote access Communication system, comprising an automated main distribution frame, a remote access device, and a device management system, **characterized in that**:
the automated main distribution frame is configured to receive a configuration command when there is a service requirement from a user, and verify validity of the configuration command after receiving the configuration command; and
the automated main distribution frame comprises a matrix switch module and is configured to configure the matrix switch module according to the configuration command to implement the port correspondence between a user device and the remote access device if the verification succeeds.

2. The system according to claim 1, wherein said automated main distribution frame comprises an inlet module and an outlet module connected with the matrix switch module respectively, and an automated main distribution frame controller, which is connected with the matrix switch module, the inlet module and the outlet module, and used to start and configure the automated main distribution frame, whereby input ports of the inlet module are connected with the user device by cables and output ports of the outlet module are connected with the remote access device by cables.

3. The system according to claim 1, wherein said remote access device is a local exchange.

4. The system according to claim 1, wherein said remote access device is a narrowband access device or a broadband access device.

5. The system according to claim 1, wherein said remote access device is a digital subscriber line access multiplexer.

6. The system according to claim 1, wherein said remote access device is a fiber access device.

7. The system according to claim 1, wherein said remote access device is an integrated access device providing access to narrowband services and broadband services access simultaneously.

8. A method for controlling a remote access Communication system, comprising:
arranging an automated main distribution frame between user devices and a remote access device, sending a configuration command to said automated main distribution frame when there is a service requirement from a user;
verifying validity of the configuration command after receiving the configuration command; and
if the verification succeeds, configuring a matrix switch module in the automated main distribution frame according to the configuration command to implement the port correspondence between a user device and the remote access device.

9. A method for controlling a remote access Communication system according to claim 8, further comprising:
if the verification fails, sending a warning to the device management system, which determines whether to resend the command or to perform other operations according to the warning feedback.

10. A method for controlling a remote access Communication system according to claim 9, wherein verifying validity of the configuration command comprises verifying authentication of contents of a command field.

11. A method for controlling a remote access Communication system according to one of claims 9 to 10, wherein verifying validity of a configuration command comprises examining rationality of configuration data in a command field.

12. A method for controlling a remote access Communication system according to one of claims 9 to 11, wherein verifying validity of a configuration command comprises examining integrality of configuration data in a command field.

13. A method for controlling a remote access Communication system according to one of claims 8 to 12, wherein said device management system sends said configuration command to said automated main distribution frame through network management.

14. A method for controlling a remote access Communication system according to one of claims 9 to 13, wherein said device management system sends the configuration command to said automated main distribution frame through network management.

## Patentansprüche

1. Fernzugangs-Kommunikationssystem, das einen automatisierten Hauptverteiler, eine Fernzugangseinrichtung und ein Einrichtungsverwaltungssystem umfasst, **dadurch gekennzeichnet, dass**
der automatisierte Hauptverteiler dafür ausgelegt ist, einen Konfigurationsbefehl zu empfangen, wenn eine Dienstanforderung von einem Benutzer besteht, und die Validität des Konfigurationsbefehls nach dem Empfangen des Konfigurationsbefehls zu verifizieren; und
der automatisierte Hauptverteiler ein Koppelfeldmodul umfasst und dafür ausgelegt ist, das Koppelfeldmodul gemäß dem Konfigurationsbefehl zu konfigurieren, um die Portkorrespondenz zwischen einer Benutzereinrichtung und der Fernzugangseinrichtung zu implementieren, wenn die Verifikation erfolgreich ist.

2. System nach Anspruch 1, wobei der automatisierte Hauptverteiler Folgendes umfasst: ein Einlassmodul und ein Auslassmodul, die jeweils mit dem Koppelfeldmodul verbunden sind, und eine Steuerung des automatisierten Hauptverteilers, die mit dem Koppelfeldmodul, dem Einlassmodul und dem Auslassmodul verbunden ist und verwendet wird, um den automatisierten Hauptverteiler zu starten und zu konfigurieren, wobei Eingangsports des Einlassmoduls durch Kabel mit der Benutzereinrichtung verbunden werden und Ausgangsports des Auslassmoduls durch Kabel mit der Fernzugangseinrichtung verbunden werden.

3. System nach Anspruch 1, wobei die Fernzugangseinrichtung eine Ortsvermittlungsstelle ist.

4. System nach Anspruch 1, wobei die Fernzugangseinrichtung eine Schmalbandzugangseinrichtung oder eine Breitbandzugangseinrichtung ist.

5. System nach Anspruch 1, wobei die Fernzugangseinrichtung ein Zugangsmultiplexer des digitalen Teilnehmeranschlusses ist.

6. System nach Anspruch 1, wobei die Fernzugangseinrichtung eine Faserzugangseinrichtung ist.

7. System nach Anspruch 1, wobei die Fernzugangseinrichtung eine integrierte Zugangseinrichtung ist, die gleichzeitig Zugang zu Schmalbanddiensten und Breitbanddienstezugang bereitstellt.

8. Verfahren zum Steuern eines Fernzugangs-Kommunikationssystems, umfassend:
Anordnen eines automatisierten Hauptverteilers zwischen Benutzereinrichtungen und einer Fernzugangseinrichtung, Senden eines Konfigurationsbefehls zu dem automatisierten Hauptverteiler, wenn eine Dienstanforderung von einem Benutzer besteht;
Verifizieren der Validität des Konfigurationsbefehls nach dem Empfangen des Konfigurationsbefehls; und
wenn die Verifikation erfolgreich ist, Konfigurieren eines Koppelfeldmoduls in dem automatisierten Hauptverteiler gemäß dem Konfigurationsbefehl, um die Portkorrespondenz zwischen einer Benutzereinrichtung und der Fernzugangseinrichtung zu implementieren.

9. Verfahren zum Steuern eines Fernzugangs-Kommunikationssystems nach Anspruch 8, ferner mit dem folgenden Schritt:
wenn die Verifikation erfolglos bleibt, Senden einer Warnung zu dem Einrichtungsverwaltungssystem, das gemäß der Warnrückmeldung bestimmt, ob der Befehl neu zu senden ist oder andere Operationen durchzuführen sind.

10. Verfahren zum Steuern eines Fernzugangs-Kommunikationssystems nach Anspruch 9, wobei das Verifizieren der Validität des Konfigurationsbefehls das Verifizieren der Authentifikation von Inhalten eines Befehlsfeldes umfasst.

11. Verfahren zum Steuern eines Fernzugangs-Kommunikationssystems nach einem der Ansprüche 9 bis 10, wobei das Verifizieren der Validität eines Konfigurationsbefehls das Untersuchen der Rationalität von Konfigurationsdaten in einem Befehlsfeld umfasst.

12. Verfahren zum Steuern eines Fernzugangs-Kommunikationssystems nach einem der Ansprüche 9 bis 11, wobei das Verifizieren der Validität eines Konfigurationsbefehls das Untersuchen der Integralität von Konfigurationsdaten in einem Befehlsfeld umfasst.

13. Verfahren zum Steuern eines Fernzugangs-Kommunikationssystems nach einem der Ansprüche 8 bis 12, wobei das Einrichtungsverwaltungssystem den Konfigurationsbefehl durch Netzverwaltung zu dem automatisierten Hauptverteiler sendet.

14. Verfahren zum Steuern eines Fernzugangs-Kommunikationssystems nach einem der Ansprüche 9 bis 13, wobei das Einrichtungsverwaltungssystem den Konfigurationsbefehl durch Netzverwaltung zu dem automatisierten Hauptverteiler sendet.

## Revendications

1. Système de communication d'accès à distance, comprenant un répartiteur principal automatisé, un dispositif d'accès à distance, et un système de gestion de dispositif, **caractérisé en ce que** :
le répartiteur principal automatisé est configuré pour recevoir une commande de configuration quand se présente une exigence de service d'un utilisateur, et vérifier la validité de la commande de configuration après réception de celle-ci ; et
le répartiteur principal automatisé comprend un module de commutation matricielle et est configuré pour configurer le module de commutation matricielle en fonction de la commande de configuration afin de mettre en oeuvre la correspondance de ports entre un dispositif utilisateur et le dispositif d'accès à distance si la vérification réussit.

2. Système selon la revendication 1, dans lequel ledit répartiteur principal automatisé comprend un module d'entrée et un module de sortie connectés respectivement au module de commutation matricielle, et une unité de commande de répartiteur principal automatisé, laquelle est connectée au module de commutation matricielle, au module d'entrée et au module de sortie, et servant à lancer et à configurer le répartiteur principal automatisé, les ports d'entrée du module d'entrée étant connectés au dispositif utilisateur par des câbles et les ports de sortie du module de sortie étant connectés au dispositif d'accès à distance par des câbles.

3. Système selon la revendication 1, dans lequel ledit dispositif d'accès à distance est un central local.

4. Système selon la revendication 1, dans lequel ledit dispositif d'accès à distance est un dispositif d'accès à bande étroite ou un dispositif d'accès à large bande.

5. Système selon la revendication 1, dans lequel ledit dispositif d'accès à distance est un multiplexeur d'accès de lignes d'abonnés numériques.

6. Système selon la revendication 1, dans lequel ledit dispositif d'accès à distance est un dispositif d'accès à fibres.

7. Système selon la revendication 1, dans lequel ledit dispositif d'accès à distance est un dispositif d'accès intégré fournissant simultanément l'accès à des services à bande étroite et l'accès à des services à large bande.

8. Procédé de commande d'un système de communication d'accès à distance, comprenant :
l'agencement d'un répartiteur principal automatisé entre des dispositifs utilisateurs et
un dispositif d'accès à distance, l'envoi d'une commande de configuration audit répartiteur principal automatisé quand se présente une exigence de service d'un utilisateur ;
la vérification de la validité de la commande de configuration après réception de celle-ci ; et
si la vérification réussit, la configuration d'un module de commutation matricielle dans le répartiteur principal automatisé en fonction de la commande de configuration afin de mettre en oeuvre la correspondance de ports entre un dispositif utilisateur et le dispositif d'accès à distance.

9. Procédé de commande d'un système de communication d'accès à distance selon la revendication 8, comprenant en outre :
si la vérification échoue, l'envoi d'un avertissement au système de gestion de dispositif, lequel détermine s'il convient d'envoyer à nouveau la commande ou d'exécuter d'autres opérations en fonction du retour d'informations fourni par l'avertissement.

10. Procédé de commande d'un système de communication d'accès à distance selon la revendication 9, dans lequel la vérification de la validité de la commande de configuration comprend la vérification de l'authentification du contenu d'un champ de commande.

11. Procédé de commande d'un système de communication d'accès à distance selon l'une des revendications 9 ou 10, dans lequel la vérification de la validité d'une commande de configuration comprend l'examen de la rationalité de données de configuration dans un champ de commande.

12. Procédé de commande d'un système de communication d'accès à distance selon l'une des revendications 9 à 11, dans lequel la vérification de la validité d'une commande de configuration comprend l'examen de l'intégralité de données de configuration dans un champ de commande.

13. Procédé de commande d'un système de communication d'accès à distance selon l'une des revendications 8 à 12, dans lequel ledit système de gestion de dispositif envoie ladite commande de configuration audit répartiteur principal automatisé par le biais de la gestion de réseau.

14. Procédé de commande d'un système de communication d'accès à distance selon l'une des revendications 9 à 13, dans lequel ledit système de gestion de dispositif envoie la commande de configuration audit répartiteur principal automatisé par le biais de la gestion de réseau.
